# EUROPÄISCHE PATENTSCHRIFT

(11) **EP 2 536 265 B1**
(45) Veröffentlichungstag und Bekanntmachung des Hinweises auf die Patenterteilung: **05.04.2017**
(21) Anmeldenummer: 11703233.4
(22) Anmeldetag: 15.02.2011
(51) Int. Cl.: A01G 13/02, E04B 1/24, E04H 1/12

(54) **TRAGWERK FÜR WETTERSCHUTZÜBERDACHUNGEN**
LOAD-BEARING STRUCTURE FOR WEATHER PROTECTION ROOFS
OUVRAGE PORTEUR POUR STRUCTURES DE PROTECTION CONTRE LES INTEMPÉRIES

(30) Priorität: 15.02.2010 DE 102010001948
(43) Veröffentlichungstag der Anmeldung: 26.12.2012
(73) Patentinhaber: BayWa Aktiengesellschaft, 81925 München (DE)
(72) Erfinder: HOLZWARTH, Rudolf, 88255 Baindt (DE); BERRETH, Klaus, 73479 Ellwangen (DE)
(74) Vertreter: Pfiz, Thomas
(86) Internationale Anmeldenummer: PCT/EP2011/052244
(87) Internationale Veröffentlichungsnummer: WO 2011/098619

(56) Entgegenhaltungen:
- DE-A1- 2 236 086
- DE-A1- 3 504 133
- DE-A1-102004 041 350
- DE-C1- 3 807 242
- DE-U1- 8 902 264
- FR-A1- 2 570 404
- GB-A- 919 606

## Beschreibung

Die Erfindung betrifft ein Tragwerk für Wetterschutzüberdachungen insbesondere für reihenförmig angeordnete Pflanzenkulturen mit voneinander beabstandeten, bodenseitig vorzugsweise über eine Bodenverankerung abgestützten Stützpfosten und über die Stützpfosten abgespannten Spannseilen.

Es ist bekannt, auf Stützpfosten und Verspannungen an den Pfosten bahnförmige Netze aufzuspannen, unter denen Pflanzenkulturen, aber ggf. auch Güter wie Fahrzeuge vor Wettereinfluss und insbesondere Hagelschäden geschützt sind. Hierfür ist es üblich, Holzpfosten oder Betonsäulen einzusetzen, die zwar hinsichtlich der Haltbarkeit bzw. statischen Eigenschaften Nachteile aufweisen, jedoch vergleichsweise einfach herstellbar und einsetzbar sind.

Anstelle solcher Pfosten wird in der DE-A 10 2004 041 350 vorgeschlagen, Metallprofile einzusetzen, die abgewinkelt oder gebogen sind, womit die erforderliche Belastungsfestigkeit erreicht werden soll. Als problematisch hat sich die Bodenverankerung von solchen linienförmig profilierten Stützen erwiesen.

Ausgehend hiervon liegt der Erfindung die Aufgabe zugrunde, die im Stand der Technik bekannten Vorrichtungen weiter zu verbessern und so zu gestalten, dass sie vorteilhafte Herstellungs- und Anwendungsmöglichkeiten bei gleichzeitig hoher Belastungsfestigkeit eröffnen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, Pfosten aus Drahtmaterial zum Aufspannen von Schutznetzen einzusetzen. Dementsprechend wird erfindungsgemäß vorgeschlagen, dass die Stützpfosten als räumliches Drahtgebilde jeweils aus einer Mehrzahl von biegesteifen Stützdrähten gebildet sind, wobei die Stützdrähte über Verbindungsmittel im Abstand zueinander gehalten sind. Durch die Drahtgitterkonstruktion wird eine hohe Materialersparnis bei gleichzeitig hoher Festigkeit gegenüber einer Vollmaterialstruktur erreicht. Dabei lässt sich die Dimensionierung und Anordnung entsprechend den Anforderungen bzw. dem Einsatzzweck konfigurieren und gestalten. So lassen sich hervorragende statische Eigenschaften, ein geringes Transportgewicht und eine hohe Lebensdauer erreichen. Ein weiterer Vorteil liegt darin, dass sich zusätzliche Anbauteile beispielsweise für die Pflanzenaufhängung einfach und flexibel mit einem solchen Drahtgebilde verbinden lassen, da die Stützdrähte und/oder die durch Verbindungsdrähte gebildeten Verbindungsmittel ein Anhängemittel zum Anhängen der Pflanzenkulturen bilden.

Für den Aufbau kann auch eine große Standfläche im Boden genutzt werden, während dies bei dünnen Vollmaterialpfosten nicht möglich ist. Zudem kann das Produkt durch geeignete Materialwahl, Struktur und Beschichtungen auch gestalterisch eingesetzt werden. Dies ist insbesondere für Schutzüberdachungen von Fahrzeugparkplätzen wichtig.

Vorteilhafterweise verlaufen die Stützdrähte über die Länge der Stützpfosten geradlinig, so dass eine einfache Herstellung möglich ist. Dabei ist es in statischer Hinsicht auch günstig, wenn sich die Stützdrähte in mehreckiger, insbesondere dreieckiger Querschnittsanordnung über die Pfostenhöhe bzw. Länge der Stützpfosten erstrecken und somit die Kanten eines Polyeders bilden. Dabei können die Stützdrähte durch vorzugsweise angeschweißte Verbindungsdrähte fachwerkartig miteinander verbunden sein.

Eine weitere baulich vorteilhafte Ausführung sieht vor, dass die Verbindungsdrähte an einer Mehrzahl von Biegungsstellen mäandrierend oder spitzwinklig gebogen sind und an den Biegungsstellen miteinander oder mit den Stützdrähten fest verbunden sind.

Alternativ oder ergänzend ist es auch möglich, dass die Verbindungsmittel durch Bleche gebildet sind, die sich zumindest über einen Abschnitt der Stützdrähte erstrecken.

Eine weitere vorteilhafte Ausgestaltung sieht vor, dass die Stützdrähte paarweise leiterartig miteinander verbunden sind.

Für das Aufspannen von Schutznetzen ist es von Vorteil, wenn die Stützpfosten an ihrem oberen Ende ein Anschlusselement zur Führung oder Fixierung von Spannseilen aufweisen.

Vorteilhafterweise ist am oberen Ende der Stützpfosten ein Kopfstück an den Stützdrähten fest angebracht, vorzugsweise angeschweißt. Dieses ist vorzugsweise schalenförmig nach oben gewölbt, so dass eine günstige Leitfläche für darüber gespannte Strukturen geschaffen wird. Günstig ist es auch, wenn an dem Kopfstück ein nach oben abstehender Gewindeschaft angeordnet ist, so dass Mittel zur Führung oder Fixierung der Spannseile auf den Gewindeschaft aufschraubbar sind.

Für die Bodenverankerung ist es vorteilhaft, wenn am unteren Ende der Stützpfosten ein in den Erdboden einsteckbares oder einsetzbares oder darauf aufstellbares Fußstück an den Stützdrähten angebracht, vorzugsweise angeschweißt ist.

Um eine hohe Tragfähigkeit zu erreichen, ist es von Vorteil, wenn die Stützpfosten auf einer im Boden verankerbaren Bodenplatte gelagert und vorzugsweise auf Zentriermitteln aufgesetzt sind. Die Bodenplatte kann im Erdreich abgesenkt sein, so dass auch eine Bodenbearbeitung nicht behindert wird.

Vorteilhafterweise bestehen die Stützdrähte und gegebenenfalls die Verbindungsdrähte aus einem gezogenen Drahtmaterial, insbesondere Spannbetondraht. Dadurch wird eine höhere Festigkeit mit geringem Materialaufwand erreicht, insbesondere im Vergleich zu warmgewalzten Drähten.

Von besonderem Vorteil ist es auch, wenn die Stützdrähte und die Verbindungsmittel aus Metall, vorzugsweise aus korrosionsbeständig verzinktem Stahlmaterial bestehen, das ggf. noch durch eine zusätzliche Schutzschicht im Fertigprodukt überdeckt wird.

Für den Einsatz besonders vorteilhaft ist es, wenn die vorzugsweise aus Rundvollmaterial gebildeten Stützdrähte eine Drahtstärke von 4 bis 16 mm aufweisen. Dabei sollten die Verbindungsdrähte dünner sein als die Stützdrähte und eine Drahtstärke von 3 bis 10 mm aufweisen.

Um einen ausreichenden Arbeitsraum freizuhalten, sollten die Stützpfosten eine Höhe bzw. Länge im Bereich von 2,5 bis 5,5 m besitzen.

Gegenstand der Erfindung sind auch Stützpfosten als Teil eines Tragwerks für Wetterschutzüberdachungen umfassend ein räumliches Drahtgebilde aus biegesteifen Stützdrähten, die über Verbindungsmittel im Abstand zueinander gehalten sind und am oberen Ende ein Anschlusselement für Spannseile tragen. Ein weiterer Erfindungsaspekt liegt in einer Wetterschutzüberdachung mit einem erfindungsgemäßen Tragwerk und darauf aufgespannten Gewebebahnen, insbesondere Hagelschutznetzen.

Im Folgenden wird die Erfindung anhand der in der Zeichnung in schematischer Weise dargestellten Ausführungsbeispiele näher erläutert. Es zeigen
- Fig. 1: ein Tragwerk zum Aufspannen von Schutznetzen als Wetterschutzüberdachung für reihenförmige Pflanzenkulturen in schaubildlicher Darstellung;
- Fig. 2: einen als räumliches Drahtgebilde zusammengesetzten Stützpfosten des Tragwerks in einer unterbrochenen Seitenansicht;
- Fig. 3: eine ausschnittsweise perspektivische Darstellung des Stützpfostens nach Fig. 2;
- Fig. 4a, b: eine weitere Ausführungsform eines Stützpfostens in einer bodenseitigen Draufsicht und einer Seitenansicht; und
- Fig. 5: eine perspektivische Ansicht eines unteren und oberen Abschnitts des Stützpfostens nach Fig. 4.

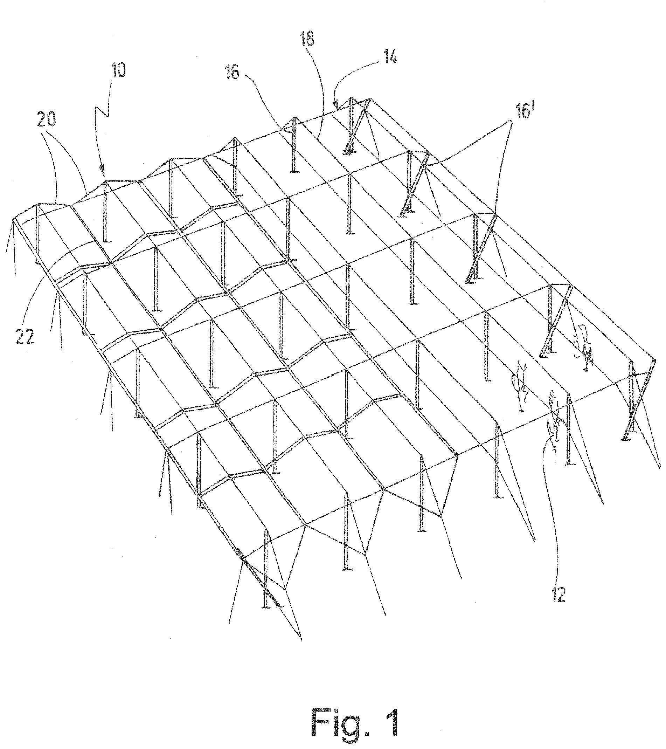

Die in der Figur 1 dargestellte Wetterschutzüberdachung 10 lässt sich über reihenförmig angeordneten Pflanzenkulturen 12 aufspannen, um während der Vegetationsperiode Wetterschäden und speziell Hagelschäden zu verhindern. Die Überdachung 10 umfasst eine Tragkonstruktion bzw. ein Tragwerk 14 mit über Stützpfosten 16, 16' gespannten Spannseilen 18, auf welche Gewebebahnen 20 aufgelegt sind, die an ihren Längsrändern 22 verbunden sind, wie es für einige Reihen dargestellt ist.

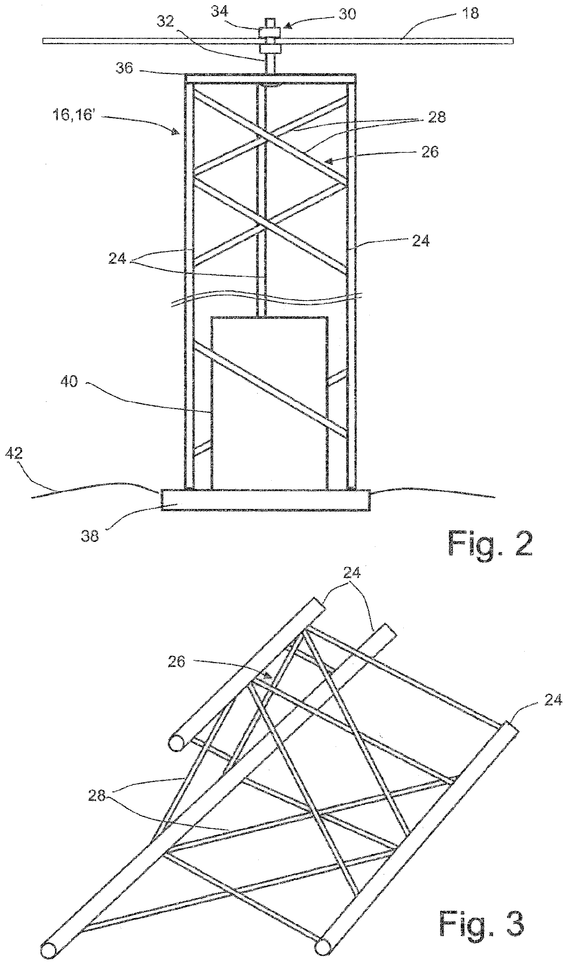

Wie aus Fig. 2 und 3 ersichtlich, sind die Stützpfosten 16, 16' als räumliches Drahtgebilde aus Drahtmaterial gebildet. In dem gezeigten Ausführungsbeispiel sind drei biegesteife Stützdrähte 24 vorgesehen, die sich in dreieckiger Anordnung parallel zueinander über die Pfostenhöhe erstrecken. Dabei sind die Stützdrähte 24 durch Verbindungsmittel 26 im Abstand zueinander gehalten. Diese sind in der gezeigten Ausführungsform durch Verbindungsdrähte 28 gebildet, die an den Stützdrähten 24 angeschweißt sind und diese fachwerkartig miteinander verbinden.

Denkbar ist es auch, dass Bleche als Verbindungsmittel 26 an den Stützdrähten 24 abschnittsweise angeschweißt werden. Eine zweckmäßige Ausführung kann auch darin bestehen, dass Stützdrähte paarweise leiterförmig miteinander verbunden und die so gebildeten Drahtleitern beispielsweise in dreieckiger Anordnung längsseitig aneinander fixiert werden.

Die Stützpfosten 16, 16' tragen an der Oberseite ein Anschlussmittel 30 zur Fixierung der Spannseile 18. Dies kann durch eine Schraube 32 mit Muttern 34 verwirklicht sein, die in einer an den Drahtenden fixierten Deckelplatte 36 gehalten ist.

Bodenseitig können die Stützpfosten 16, 16' auf einer Bodenplatte 38 abgestützt sein und durch ein daran abstehendes Zentrierrohr 40 gegen seitliches Abgleiten gesichert sein. Die Bodenplatte 38 kann durch Eindrücken im Erdbereich bzw. Erdboden 42 verankert sein. Vor allem bei den schräg angestellten Außenpfosten 16', die aufgrund der daran angebrachten Abankerungen hohen Druckbelastungen ausgesetzt sind, ist es zweckmäßig, die Bodenplatte 38 mittels eines Stempels (unter Einsatz von Baggern) ca. 60-100 cm tief in die Erde einzudrücken, so dass auch eine hohe Verdichtung unterhalb der Platte erreicht wird. Hingegen kann an den Innenpfosten 16 eine Platte 38, welche ungefähr die Größe der dreieckigen Grundfläche besitzt, endseitig an den Stützdrähten 24 direkt angeschweißt sein.

Die Runddrähte 24, 28 können aus einem gezogenen und außen verzinkten Stahlmaterial bestehen. Dabei sollten je nach geforderter Belastungsfestigkeit die Stützdrähte 24 eine Drahtstärke von 4 bis 16 mm aufweisen, während die Verbindungsdrähte allgemein dünner sind und eine Drahtstärke von 3 bis 10 mm besitzen.

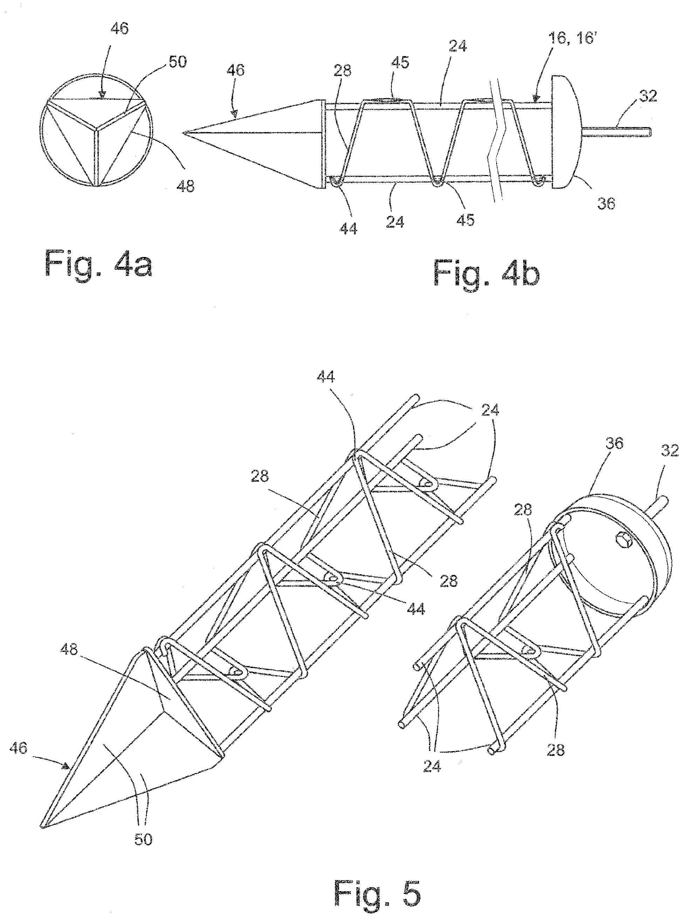

Bei der in Fig. 4 und 5 gezeigten Ausführungsform sind gleich oder ähnliche Teile mit denselben Bezugszeichen versehen wie oben beschrieben. Ein besonderer Unterschied besteht in einer herstellungstechnischen Vereinfachung durch die Verbindung von drei geradlinig verlaufenden Stützdrähten 24 mit zwei mäandrierend gebogenen Verbindungsdrähten 28. Letztere besitzen über die Pfostenhöhe verteilt eine Mehrzahl von Biegungsstellen 44, die durch Schweißstellen 45 miteinander oder mit den Stützdrähten 24 fest verbunden sind. Durch die so erhaltene räumliche Gitterkonstruktion ergeben sich eine Vielzahl von geeigneten Anhängepunkten zum einfachen Anhängen beispielsweise von Ästen der Pflanzenkulturen.

Zweckmäßig ist am unteren Ende der Pfosten 16, 16' ein in den Erdboden 42 einsteckbares Fußstück 46 angeschweißt. Dieses umfasst eine dreieckige Grundplatte 48, an der drei Pfeilrippen 50 im Winkeln von 120° sternförmig angeordnet sind und zu einer freien Spitze hin konvergieren. Beim Einstecken in den Erdboden wird das Erdreich zwischen den Flächen 48, 50 komprimiert, so dass ein guter Seitenhalt der Pfosten 16, 16' sichergestellt ist.

Da obere Ende der Pfosten 16, 16' wird durch ein schalenförmiges, nach oben gewölbtes Kopfstück 36 abgeschlossen, an dessen Innenrand die oberen Enden der Stützdrähte 24 angeschweißt sind. Eine Schraube ist zentral in das Kopfstück 36 eingesetzt, so dass der nach oben abstehende Schraubschaft 32 das Anschrauben von Führungs- bzw. Fixierungsmitteln für die Spannseile 18 erlaubt.

## Patentansprüche

1. Tragwerk für Wetterschutzüberdachungen (10) insbesondere für reihenförmig angeordnete Pflanzenkulturen (12) mit voneinander beabstandeten, bodenseitig vorzugsweise über eine Bodenverankerung abgestützten Stützpfosten (16,16') und über die Stützpfosten (16,16') abgespannten Spannseilen (18), **dadurch gekennzeichnet, dass** die Stützpfosten (16,16') als räumliches Drahtgebilde jeweils aus einer Mehrzahl von biegesteifen Stützdrähten (24) zusammengesetzt sind, wobei die Stützdrähte (24) über Verbindungsmittel (26) im Abstand zueinander gehalten sind, und dass die Stützdrähte (24) und/oder die durch Verbindungsdrähte (28) gebildeten Verbindungsmittel (26) ein Anhängemittel zum Anhängen der Pflanzenkulturen bilden.

2. Tragwerk nach Anspruch 1, **dadurch gekennzeichnet, dass** die Stützdrähte (24) über die Länge der Stützpfosten (16,16') geradlinig verlaufen.

3. Tragwerk nach Anspruch 1 oder 2, **dadurch gekennzeichnet, dass** die Stützdrähte (24) in den Querschnittsebenen der Stützpfosten (16,16') ein Vieleck, insbesondere ein Dreieck aufspannen.

4. Tragwerk nach einem der Ansprüche 1 bis 3, **dadurch gekennzeichnet, dass** die Stützdrähte (24) durch vorzugsweise angeschweißte Verbindungsdrähte (28) fachwerkartig miteinander verbunden sind.

5. Tragwerk nach einem der Ansprüche 1 bis 4, **dadurch gekennzeichnet, dass** die Verbindungsdrähte (28) an einer Mehrzahl von Biegungsstellen mäandrierend oder spitzwinklig gebogen sind und an den Biegungsstellen miteinander oder mit den Stützdrähten (24) fest verbunden sind.

6. Tragwerk nach einem der Ansprüche 1 bis 5, **dadurch gekennzeichnet, dass** die Verbindungsmittel (26) durch Bleche gebildet sind, die sich zumindest über einen Abschnitt der Stützdrähte (24) erstrecken.

7. Tragwerk nach einem der Ansprüche 1 bis 4, **dadurch gekennzeichnet, dass** die Stützdrähte (24) paarweise leiterartig miteinander verbunden sind.

8. Tragwerk nach einem der Ansprüche 1 bis 7, **dadurch gekennzeichnet, dass** die Stützpfosten (16,16') an ihrem oberen Ende ein Anschlusselement (30) zur Führung oder Fixierung der Spannseile (18) aufweisen.

9. Tragwerk nach einem der Ansprüche 1 bis 8, **dadurch gekennzeichnet, dass** am oberen Ende der Stützpfosten (16,16') ein vorzugsweise schalenförmig gewölbtes Kopfstück (36) an den Stützdrähten (24) fest angebracht, vorzugsweise angeschweißt ist.

10. Tragwerk nach Anspruch 9, **dadurch gekennzeichnet, dass** an dem Kopfstück (36) ein nach oben abstehender Gewindeschaft (32) angeordnet ist, und dass Mittel (34) zur Führung oder Fixierung der Spannseile (18) auf den Gewindeschaft (32) aufgeschraubt oder aufschraubbar sind.

11. Tragwerk nach einem der Ansprüche 1 bis 10, **dadurch gekennzeichnet, dass** am unteren Ende der Stützpfosten (16,16') ein in den Erdboden einsteckbares oder einsetzbares oder darauf aufstellbares Fußstück an den Stützdrähten (24) angebracht, vorzugsweise angeschweißt ist.

12. Tragwerk nach einem der Ansprüche 1 bis 11, **dadurch gekennzeichnet, dass** die Stützpfosten (16,16') auf einer im Boden verankerbaren Bodenplatte (38) gelagert und dabei vorzugsweise auf Zentriermitteln (40) gegen Verlagerung gesichert sind.

13. Tragwerk nach einem der Ansprüche 1 bis 12, **dadurch gekennzeichnet, dass** die Stützdrähte (24) und gegebenenfalls die Verbindungsdrähte (28) aus einem gezogenen Drahtmaterial, insbesondere Spannbetondraht bestehen.

14. Tragwerk nach einem der Ansprüche 1 bis 13, **dadurch gekennzeichnet, dass** die Stützpfosten (16,16') eine Höhe im Bereich von 2,5 bis 5,5 m besitzen.

15. Wetterschutzüberdachung (10) mit einem Tragwerk (14) nach einem der vorhergehenden Ansprüche und auf dem Tragwerk (14) aufgespannten Gewebebahnen (20).

## Claims

1. Supporting structure for weather protection canopies (10), in particular for plant crop (12) arranged in the form of rows, having spaced-apart support posts (16, 16') which are supported on the ground side preferably via a ground anchoring, and having tension cables (18) braced over the support posts (16, 16'), **characterized in that** the support posts (16, 16'), as a three-dimensional wire structure, are each composed of a plurality of flexurally rigid support wires (24), wherein the support wires (24) are kept at a distance from one another via connecting means (26), and **in that** the support wires (24) and/or the connecting means (26), which are formed by connecting wires (28), form an attachment means for attaching the plant crop.

2. Supporting structure according to Claim 1, **characterized in that** the support wires (24) extend rectilinearly over the length of the support posts (16, 16').

3. Supporting structure according to Claim 1 or 2, **characterized in that** the support wires (24) define a polygon, in particular a triangle, in the cross-sectional planes of the support posts (16, 16').

4. Supporting structure according to one of Claims 1 to 3, **characterized in that** the support wires (24) are connected to one another in the manner of a framework by preferably welded-on connecting wires (28).

5. Supporting structure according to one of Claims 1 to 4, **characterized in that** the connecting wires (28) are bent in a meandering or acute-angle manner at a plurality of bending points and are fixedly connected to one another or to the support wires (24) at the bending points.

6. Supporting structure according to one of Claims 1 to 5, **characterized in that** the connecting means (26) are formed by metal sheets which extend at least over a portion of the support wires (24).

7. Supporting structure according to one of Claims 1 to 4, **characterized in that** the support wires (24) are connected to one another in pairs in the manner of a ladder.

8. Supporting structure according to one of Claims 1 to 7, **characterized in that** the support posts (16, 16') have, at their upper end, a connection element (30) for guiding or fixing the tension cables (18).

9. Supporting structure according to one of Claims 1 to 8, **characterized in that** a head piece (36), which is preferably curved in the form of a dish, is fixedly mounted, preferably welded, on the support wires (24) at the upper end of the support posts (16, 16').

10. Supporting structure according to Claim 9, **characterized in that** an upwardly projecting threaded shaft (32) is arranged on the head piece (36), and **in that** means (34) for guiding or fixing the tension cables (18) are screwed or can be screwed onto the threaded shaft (32).

11. Supporting structure according to one of Claims 1 to 10, **characterized in that** a foot piece, which can be plugged or inserted into the ground or can be placed thereon, is mounted, preferably welded, on the support wires (24) at the lower end of the support posts (16, 16').

12. Supporting structure according to one of Claims 1 to 11, **characterized in that** the support posts (16, 16') are mounted on a baseplate (38) which can be anchored in the ground and are thereby secured against displacement, preferably on centring means (40).

13. Supporting structure according to one of Claims 1 to 12, **characterized in that** the support wires (24) and, where appropriate, the connecting wires (28), consist of a drawn wire material, in particular prestressed concrete wire.

14. Supporting structure according to one of Claims 1 to 13, **characterized in that** the support posts (16, 16') have a height in the range from 2.5 to 5.5 m.

15. Weather protection canopy (10) having a supporting structure (14) according to one of the preceding claims and fabric sheets (20) stretched on the supporting structure (14).

## Revendications

1. Ouvrage porteur pour toitures de protection contre les intempéries (10), en particulier pour des cultures végétales disposées en rangées (12) avec des poteaux de support (16, 16') espacés les uns des autres, supportés au sol de préférence par un ancrage au sol et des câbles tendeurs (18) tendus sur les poteaux de support (16, 16'), **caractérisé en ce que** les poteaux de support (16, 16') sont assemblés sous forme de structure en fils tridimensionnelle à chaque fois à partir d'une pluralité de fils de support rigides en flexion (24), les fils de support (24) étant retenus à distance les uns des autres par le biais de moyens de liaison (26), et **en ce que** les fils de support (24) et/ou les moyens de liaison (26) formés par des fils de liaison (28) forment un moyen d'accrochage pour accrocher les cultures végétales.

2. Ouvrage porteur selon la revendication 1, **caractérisé en ce que** les fils de support (24) s'étendent en ligne droite sur la longueur des poteaux de support (16, 16').

3. Ouvrage porteur selon la revendication 1 ou 2, **caractérisé en ce que** les fils de support (24) forment un polygone, en particulier un triangle, dans les plans en section transversale des poteaux de support (16, 16').

4. Ouvrage porteur selon l'une quelconque des revendications 1 à 3, **caractérisé en ce que** les fils de support (24) sont connectés les uns aux autres en forme de treillis par des fils de liaison (28) de préférence raccordés par soudage.

5. Ouvrage porteur selon l'une quelconque des revendications 1 à 4, **caractérisé en ce que** les fils métalliques de liaison (28) sont recourbés en méandres ou à angle droit au niveau d'une pluralité de zones de courbure et sont reliés fixement au niveau des zones de courbure les uns aux autres ou aux fils de support (24).

6. Ouvrage porteur selon l'une quelconque des revendications 1 à 5, **caractérisé en ce que** les moyens de liaison (26) sont formés par des tôles qui s'étendent au moins sur une portion des fils de support (24).

7. Ouvrage porteur selon l'une quelconque des revendications 1 à 4, **caractérisé en ce que** les fils de support (24) sont connectés les uns aux autres par paires en échelle.

8. Ouvrage porteur selon l'une quelconque des revendications 1 à 7, **caractérisé en ce que** les poteaux de support (16, 16') présentent au niveau de leur extrémité supérieure un élément de raccordement (30) pour guider ou fixer les câbles tendeurs (18).

9. Ouvrage porteur selon l'une quelconque des revendications 1 à 8, **caractérisé en ce qu'**à l'extrémité supérieure des poteaux de support (16, 16') une pièce de tête (36) de préférence cintrée en forme de coque est montée fixement, de préférence par soudage, sur les fils de support (24).

10. Ouvrage porteur selon la revendication 9, **caractérisé en ce que** qu'une tige filetée (32) faisant saillie vers le haut est disposée au niveau de la pièce de tête (36) et **en ce que** des moyens (34) pour guider ou fixer les câbles tendeurs (18) sont vissés ou peuvent être vissés sur la tige filetée (32).

11. Ouvrage porteur selon l'une quelconque des revendications 1 à 10, **caractérisé en ce qu'**à l'extrémité inférieure des poteaux de support (16, 16') est monté, de préférence par soudage, une pièce de base pouvant être enfoncée ou insérée ou posée dans ou sur le sol au niveau des fils de support (24).

12. Ouvrage porteur selon l'une quelconque des revendications 1 à 11, **caractérisé en ce que** les poteaux de support (16, 16') sont supportés sur une plaque de sol (38) pouvant être ancrée dans le sol et sont ainsi fixés de préférence sur des moyens de centrage (40) pour les empêcher de se déplacer.

13. Ouvrage porteur selon l'une quelconque des revendications 1 à 12, **caractérisé en ce que** les fils de support (24) et éventuellement les fils de liaison (28) se composent d'un matériau en fil étiré, en particulier d'un câble pour béton précontraint.

14. Ouvrage porteur selon l'une quelconque des revendications 1 à 13, **caractérisé en ce que** les poteaux de support (16, 16') présentent une hauteur de l'ordre de 2,5 à 5,5 m.

15. Toiture de protection contre les intempéries (10) comprenant un ouvrage porteur (14) selon l'une quelconque des revendications précédentes et des toiles en tissu (20) tendues sur l'ouvrage porteur (14).
